# DEMANDE DE BREVET EUROPEEN

(11) **EP 4 755 718 A1**
(43) Date de publication de la demande: **10.06.2026**
(21) Numéro de dépôt: 25218205.0
(22) Date de dépôt: 25.11.2025
(51) Int. Cl.: B60R 9/06, B60D 1/56, B60R 19/34

(54) **AGENCEMENT COMPRENANT UN SUPPORT DESTINÉ À PORTER UNE CHARGE**

(30) Priorité: 04.12.2024 FR 2413431
(71) Demandeur: RENAULT s.a.s., 92100 Boulogne-Billancourt (FR)
(72) Inventeur: BEZEAULT, Loïc, 78280 GUYANCOURT (FR); DUCHENE, Vincent, 78280 GUYANCOURT (FR)

(57) **Abrégé**

Agencement pour un véhicule automobile comprenant :
• un premier élément de caisse (11), notamment un premier longeron, équipé d'une ouverture taraudée (13) apte à coopérer avec un anneau de remorquage,
• une traverse de choc (14) fixée au premier élément de caisse,
• un support (4G, 4D, 4G1, 4G2, 4G3) comprenant :
- une portion de soutien (21) destinée à supporter une charge,
- une portion filetée (24) vissée dans l'ouverture taraudée, et
- une surface d'appui (25) en appui contre la traverse de choc.

## Description

### Domaine Technique de l'invention

L'invention concerne un agencement pour un véhicule automobile comprenant au moins un support vissé dans une ouverture taraudée solidaire d'un élément de caisse, l'au moins un support étant destiné à supporter une charge telle qu'un coffre externe ou un porte-vélos. L'invention concerne également un véhicule automobile comprenant un tel agencement.

### Etat de la technique antérieure

Pour augmenter la capacité de chargement d'un véhicule automobile, on connait des dispositifs de chargement, fixés de manière amovible à un crochet d'attelage du véhicule. Ces dispositifs de chargement peuvent notamment comprendre un coffre externe tel qu'une malle, à l'intérieur duquel des affaires peuvent être rangées, ou encore un porte-vélos. Le crochet d'attelage comprend une boule d'attelage et le dispositif de chargement comprend un organe de serrage, actionnable au moyen d'une poignée, qui serre fortement ladite boule d'attelage. Un tel dispositif de chargement est monté en porte-à-faux sur le crochet d'attelage

Un tel dispositif de chargement présente néanmoins des inconvénients :
- La charge exercée par le dispositif de chargement monté en porte-à-faux sollicite fortement le crochet d'attelage, en particulier lorsque le véhicule subit des accélérations verticales, par exemple lorsqu'il roule sur un dos d'âne. Le crochet d'attelage doit donc être très massif pour supporter de telles charges.
- Lorsqu'il n'est pas utilisé, un crochet d'attelage doit être obligatoirement retiré car sa présence pourrait aggraver les conséquences d'une collision. Or, le montage ou le démontage d'un crochet d'attelage est une opération fastidieuse.
- Le dispositif de chargement peut facilement pivoter autour de la boule d'attelage. Il est donc nécessaire de serrer très fortement la boule d'attelage pour éviter un tel mouvement de rotation. Même lorsque la boule d'attelage est serrée très fortement, un couple exercé sur un bord du dispositif de chargement, par exemple consécutivement à un choc, peut suffire à faire pivoter le dispositif de chargement relativement au véhicule.

Une alternative aux systèmes de chargement fixés sur boule d'attelage est décrite dans la publication FR2981607A1. Il existe néanmoins un besoin d'améliorer l'ergonomie et la robustesse d'un tel système de chargement.

### Présentation de l'invention

Le but de l'invention est de fournir un agencement pour un véhicule automobile remédiant aux inconvénients ci-dessus et améliorant les agencements connus de l'art antérieur.

Plus précisément, un premier objet de l'invention est un agencement permettant de supporter de manière fiable et robuste un dispositif de chargement monté en porte à faux à l'arrière du véhicule.

Un deuxième objet de l'invention est un agencement particulièrement simple à fabriquer et à utiliser.

### Résumé de l'invention

L'invention se rapporte à un agencement pour un véhicule automobile comprenant :
- un premier élément de caisse, notamment un premier longeron, équipé d'une ouverture taraudée apte à coopérer avec un anneau de remorquage,
- une traverse de choc fixée au premier élément de caisse,
- un support comprenant une portion de soutien destinée à supporter une charge, une portion filetée vissée dans l'ouverture taraudée, et une surface d'appui en appui contre la traverse de choc.

La traverse de choc peut comprendre un trou, le support traversant le trou, et la surface d'appui étant en appui contre un bord du trou.

Le support peut comprendre un axe monolithique, notamment en acier, l'axe comprenant ladite portion filetée et ladite surface d'appui.

La surface d'appui peut être une surface plane ou une surface conique.

L'agencement peut comprendre un absorbeur de chocs s'étendant entre le premier élément de caisse et la traverse de choc, l'absorbeur de chocs étant destiné à absorber au moins une partie de l'énergie d'un choc contre la traverse de choc, la traverse de choc étant fixée au premier élément de caisse par l'intermédiaire dudit absorbeur de chocs.

L'absorbeur de chocs peut comprendre un élément tubulaire, et le support peut s'étendre à l'intérieur de l'élément tubulaire.

Le support peut comprendre un axe, l'axe comprenant ladite portion filetée, le support comprenant en outre un élément d'appui mobile relativement à l'axe et un moyen de rappel, l'élément d'appui comprenant ladite surface d'appui, le moyen de rappel comprenant une première extrémité en appui sur l'axe et une deuxième extrémité en appui sur l'élément d'appui, le moyen de rappel étant configuré de sorte que la surface d'appui de l'élément d'appui exerce un appui contre la traverse de choc.

L'élément d'appui peut comprendre au moins une rainure, et le support peut comprendre au moins une goupille solidaire de l'axe et s'étendant dans la rainure.

L'agencement peut comprendre en outre un dispositif de chargement fixé à la portion de soutien du support.

L'invention se rapporte également à un véhicule automobile comprenant un agencement tel que défini précédemment.

### Présentation des figures

Ces objets, caractéristiques et avantages de la présente invention seront exposés en détail dans la description suivante de plusieurs modes de réalisation particuliers présentés à titre non-limitatif, en relation avec les figures jointes parmi lesquelles :
La figure 1 est une vue en perspective d'un système de chargement selon un mode de réalisation de l'invention.
La figure 2 est une vue en perspective d'une partie arrière de deux supports du système de chargement.
La figure 3 est une vue en coupe d'un agencement d'un véhicule automobile selon un premier mode de réalisation de l'invention.
La figure 4 est une vue en coupe d'un agencement d'un véhicule automobile selon un deuxième mode de réalisation de l'invention.
La figure 5 est une vue en perspective d'un agencement d'un véhicule automobile selon un troisième mode de réalisation de l'invention.
La figure 6 est une vue en perspective d'un support de l'agencement de la figure 5.
La figure 7 est une vue en coupe de l'agencement de la figure 5.

### Description détaillée

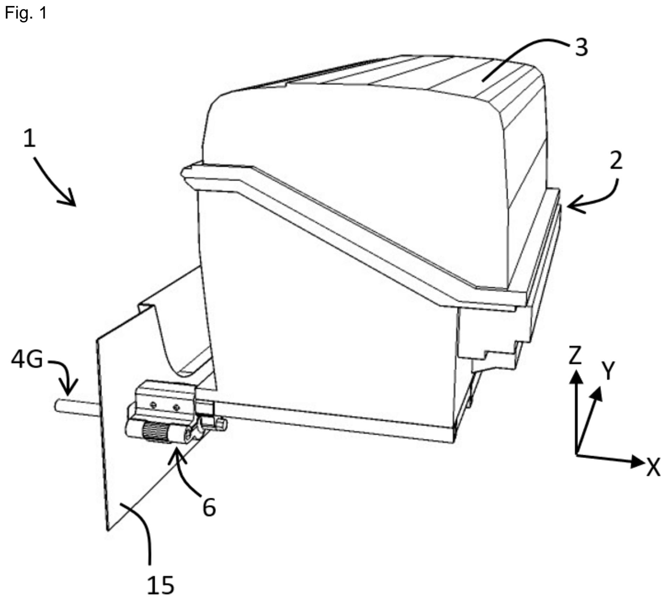

La figure 1 illustre schématiquement un système de chargement 1 pour un véhicule automobile selon un mode de réalisation de l'invention. Le système de chargement 1 est destiné à augmenter la capacité de chargement du véhicule en fournissant un volume de chargement auxiliaire positionné à l'arrière du véhicule. Le système de chargement 1 comprend des supports 4G, 4D solidaires du véhicule, notamment solidaires de la caisse du véhicule, et un dispositif de chargement 2 destiné à être fixé de manière amovible auxdits supports.

Le dispositif de chargement 2 peut comprendre un coffre externe 3 à l'intérieur duquel des objets peuvent être rangés. Alternativement, le dispositif de chargement 2 pourrait comprendre un porte-vélos, ou plus généralement un dispositif configuré pour transporter tout type d'objet à l'extérieur du véhicule.

Dans ce document, l'axe X désigne l'axe longitudinal d'un véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. On considère que le véhicule repose sur un sol horizontal. L'axe Z est un axe vertical, orienté de bas en haut. Les axes X, Y et Z forment un repère orthogonal.

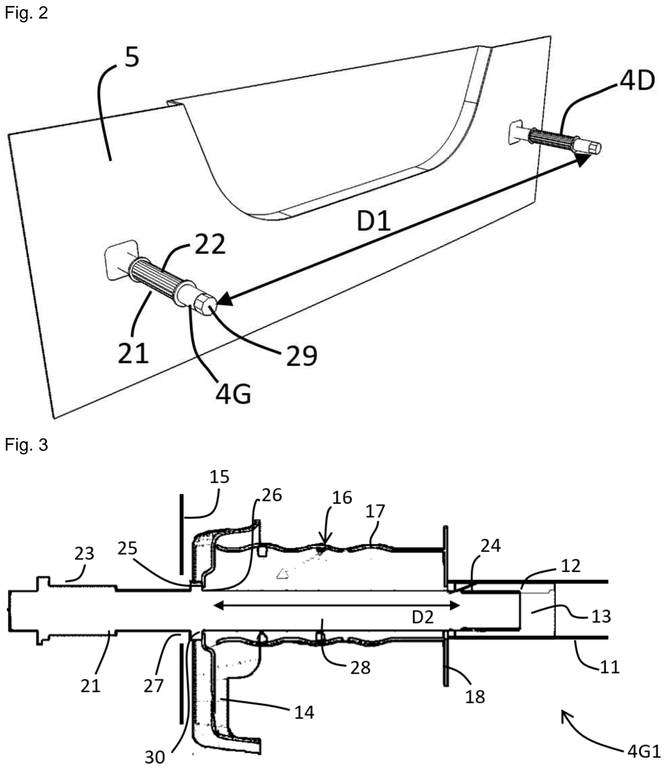

Pour la fixation du dispositif de chargement 2 au véhicule, le système de chargement 1 comprend un premier support 4G, ou support gauche 4G, et un deuxième support 4D, ou support droit 4D. Les deux supports 4G, 4D sont notamment illustrés sur la figure 2. Les deux supports 4G, 4D coopèrent respectivement avec un premier organe de fixation 6 et un deuxième organe de fixation appartenant au dispositif de chargement 2. Les organes de fixation 6 peuvent, par exemple, comprendre des mâchoires destinées à serrer respectivement les supports 4G et 4D. Le dispositif de chargement 2 est positionné à l'arrière du véhicule, et en porte-à-faux relativement aux deux supports 4G, 4D. Le dispositif de chargement 2 exerce un effort vertical vers le bas sur chacun des deux supports 4G, 4D. De plus, en raison de la fixation en porte-à-faux du dispositif de chargement 2, les deux supports 4G, 4D subissent des efforts de flexion.

Le premier support 4G et le deuxième axe 4D s'étendent parallèlement l'un à l'autre et à une distance D1 non nulle l'un de l'autre. La distance D1 peut être, par exemple, au moins égale à 50cm. Chaque support 4G, 4D comprend une forme allongée qui s'étend parallèlement à l'axe longitudinal X. Les deux supports 4G, 4D sont positionnés sensiblement à hauteur d'un parechoc arrière du véhicule, notamment au niveau d'un soubassement du véhicule. Les deux supports 4G, 4D peuvent être saillant vers l'arrière du véhicule d'environ une dizaine de centimètres. Les deux supports 4G, 4D peuvent être positionnés côte-à-côte, c'est-à-dire à une même hauteur selon l'axe vertical Z. Avantageusement, les deux supports 4G, 4D sont fixés de manière amovible à la caisse du véhicule. Ainsi, ils peuvent être retirés lorsque le dispositif de chargement 2 n'est pas utilisé, de manière à éviter que les axes percutent un objet ou une personne ou même perturbent la manœuvrabilité du véhicule. Les deux supports 4G, 4D ont de préférence une forme identique et sont interchangeables. Le système de chargement 1 peut ainsi présenter un plan médian qui est également un plan de symétrie.

Dans la mesure où les deux supports 4G, 4D présentent une forme identique, on limitera la description au premier support 4G et à son environnement. Différents modes de réalisation du support 4G sont envisageables. Ces différents modes de réalisation s'inscrivent dans un même environnement comprenant un premier élément de caisse, une traverse de choc, et un absorbeur de chocs reliant la traverse de choc au premier élément de caisse.

L'agencement comprend donc un premier élément de caisse 11, notamment un premier longeron 11. La caisse du véhicule désigne la structure rigide qui supporte les différents équipements du véhicule. La caisse comprend un ensemble d'éléments, de préférence en acier ou tout au moins en matériau rigide, fixés ensemble notamment par soudure. Un longeron désigne un élément de caisse s'étendant parallèlement à l'axe longitudinal X, au niveau du soubassement du véhicule. La caisse du véhicule comprend un longeron gauche et un longeron droit. Les deux longerons peuvent être reliés ensemble par une ou plusieurs traverses. Une traverse désigne un élément de caisse s'étendant parallèlement à l'axe transversal Y.

Le premier longeron 11 est équipé d'une douille 12 pourvue d'une ouverture taraudée 13. La douille 12 est fixée au premier longeron 11, notamment au niveau de l'extrémité arrière du premier longeron 11. La douille 12 peut notamment être soudée, visée ou rivetée au premier longeron 11. L'ouverture taraudée 13 s'étend parallèlement à l'axe longitudinal X. L'ouverture taraudée 13 est apte à coopérer avec un anneau de remorquage, c'est-à-dire qu'un anneau de remorquage peut être vissé dans l'ouverture taraudée. L'ouverture taraudée 13 comprend un diamètre compris entre 18mm et 25mm inclus. Cette ouverture taraudée a un diamètre correspondant à un diamètre classique de la partie filetée associée à un anneau de remorquage. La douille 12, ainsi que le moyen de fixation de la douille au premier longeron 11, sont aptes à supporter des efforts de tractions qui s'exercent lorsque le véhicule est remorqué. Ces efforts de tractions peuvent être notamment égaux au poids du véhicule.

De manière originale, l'invention repose donc sur l'utilisation d'une ouverture taraudée initialement prévue pour fixer un anneau de remorquage. Une telle ouverture taraudée est avant tout conçue pour supporter des efforts de traction orientés parallèlement à l'axe longitudinal X. Toutefois, comme nous allons le voir par la suite, l'invention propose un agencement permettant à un support 4G vissé dans cette ouverture taraudée 13 de supporter des efforts exercés par le poids du dispositif de chargement 2, c'est-à-dire des efforts orientés verticalement.

L'agencement comprend également une traverse de choc 14. Une traverse de choc est un élément de caisse qui s'étend parallèlement à l'axe transversal Y à l'arrière de la caisse. La traverse de choc 14 relie le longeron droit au longeron gauche. La traverse de choc 14 peut comprendre une plaque métallique, de préférence en acier, pliée et découpée selon une forme donnée. Cette plaque métallique peut s'étendre au moins grossièrement dans plan perpendiculaire à l'axe longitudinal. La traverse de choc 14 est avantageusement recouverte par un panneau de carrosserie 15 arrière. Le panneau de carrosserie 15 peut avoir essentiellement une fonction esthétique. Le panneau de carrosserie 15 n'est pas un élément de la caisse du véhicule.

L'agencement comprend aussi un absorbeur de chocs 16, classiquement dénommé « crash-box » en anglais, ayant la forme générale d'un boitier allongé s'étendant entre le premier longeron 11 et la traverse de choc 14, suivant la direction longitudinale X du véhicule. Autrement dit, la traverse de choc 14 est relié au premier longeron 11 par l'intermédiaire de l'absorbeur de chocs 16. Ce dernier est un composant destiné à absorber l'énergie d'un choc qui surviendrait contre la traverse de choc 14. A cet effet, l'absorbeur de chocs 16 est destiné à se déformer lorsqu'il subit un choc orienté parallèlement à l'axe longitudinal X. L'énergie dissipée dans la déformation de l'absorbeur de chocs n'est donc pas transmise au premier longeron, ou est fortement réduite. L'absorbeur de chocs est donc destiné à réduire l'énergie transmise à la caisse du véhicule lors d'un choc.

L'absorbeur de chocs 16 peut comprendre un élément tubulaire 17 destiné à se déformer en cas de choc longitudinal. L'élément tubulaire 17 peut comprendre, par exemple, une section grossièrement carrée. L'élément tubulaire 17 peut comprendre une zone de déformation programmée, c'est-à-dire une zone moins rigide que le reste de la caisse et permettant de maîtriser la déformation de la caisse en cas de choc contre la traverse arrière. Cette zone de déformation programmée peut être formée par des parois ondulées de manière à faciliter leur déformation en cas de choc longitudinal. Les parois ondulées peuvent être pourvues d'ouvertures et/ou de zones plus fragiles. L'absorbeur de chocs 16 peut en outre comprendre une interface 18 par l'intermédiaire de laquelle l'absorbeur de chocs 16 est fixée au premier longeron 11, notamment par soudure. L'interface 18 peut comprendre une plaque métallique, de préférence en acier, pliée et découpée selon une forme donnée. L'interface 18 peut être fixée, notamment soudée à une extrémité avant de l'élément tubulaire 17. De même, une extrémité arrière de l'élément tubulaire 17 peut être fixée, notamment soudée à la traverse de choc 14.

De manière commune à tous les modes de réalisation présentés, le support 4G comprend une portion de soutien 21 destinée à supporter une charge. La portion de soutien 21 s'étend notamment à l'arrière du panneau de carrosserie 15. La portion de soutien 21 s'étend donc à l'arrière du support 4G La portion de soutien 21 est destinée à coopérer avec un organe de fixation 6 du dispositif de chargement 2. Comme cela est illustré sur la figure 2, la portion de soutien 21 peut être équipée d'un manchon 22, par exemple en caoutchouc ou en matériau souple. Le manchon 22 peut être destiné à être serré par une mâchoire de l'organe de fixation 6 La portion de soutien 21 peut également être équipée d'une collerette 23 formant une butée axiale pour l'organe de fixation 6.

De manière commune à tous les modes de réalisation présentés, le support 4G comprend également une portion filetée 24 vissée dans l'ouverture taraudée 13. La portion filetée 24 s'étend donc à l'avant du panneau de carrosserie 15. La portion filetée 24 peut être formée au niveau d'une extrémité avant du support 4G. On comprend donc que le support 4G est destiné à être vissé en lieu et place d'un anneau de remorquage du véhicule. La coopération de la portion filetée 24 avec l'ouverture taraudée 13 fournit un premier point d'appui, ou première surface d'appui, au support 4G. Avantageusement le support peut comprendre une empreinte 29, par exemple de forme hexagonale, permettant le vissage ou le dévissage du support 4G avec un outil.

La portion filetée 24 est positionnée à une distance non négligeable de la portion de soutien 21. On comprend donc qu'il existe un bras de levier potentiellement important s'exerçant sur l'ouverture filetée 13 lorsque la portion de soutien 21 supporte un effort orienté verticalement. Afin de réduire l'effet de bras de levier, le support 4G comprend avantageusement une surface d'appui 25 en appui contre la traverse de choc 14. La surface d'appui 25 est une deuxième surface d'appui distincte de la portion filetée 24. Une distance D2 entre la portion filetée 24 et la surface d'appui 25 peut être supérieure ou égale à 5cm, voire supérieure ou égale à 10cm. La surface d'appui 25 est en contact direct contre la traverse de choc 14. La deuxième surface d'appui 25 permet de supporter le support 4G en un point qui est plus proche de la portion de soutien 21. La deuxième surface d'appui 25 permet aussi de limiter la flexion du support 4G lorsqu'il supporte un effort vertical exercé sur sa portion de soutien 21.

Avantageusement, la traverse de choc 14 comprend un trou 26. Le support 4G traverse le trou 26 et la surface d'appui 25 est en appui contre un bord du trou 26. La surface d'appui s'étend ainsi à 360° autour du supp ort 4G. Le trou 26 peut, par exemple, avoir une forme circulaire. Le panneau de carrosserie 15 comprend également une ouverture 27 par laquelle le support 4G est inséré. L'ouverture 27 peut également présenter une forme circulaire. Le diamètre de l'ouverture 27 peut être strictement supérieur au diamètre du trou 26 de manière à laisser passer la surface d'appui 25.

Le trou 26 peut communiquer avec une zone interne de l'élément tubulaire 17. Ainsi, le support 4G s'étend à l'intérieur de l'élément tubulaire 17, jusqu'à l'ouverture taraudée 13. Il n'est donc pas nécessaire de prévoir un volume libre à côté de l'absorbeur de chocs 16 pour le support 4G.

On décrit à présent trois modes de réalisation du support 4G en relation avec les figures 3 à 7. Le support de chacun de ces trois modes de réalisation est respectivement référencé 4G1, 4G2 et 4G3. En outre, on utilisera les mêmes signes de référence pour identifier des éléments ou objets présentant les mêmes fonctions.

La figure 3 illustre le support 4G1 selon un premier mode de réalisation de l'invention. Selon ce mode de réalisation, le support 4G1 comprend un axe 28 monolithique, c'est-à-dire d'une seule pièce. L'axe 28 peut être en acier. L'axe 28 comprend ladite portion filetée 24 et ladite surface d'appui 25. En outre, l'axe 28 comprend également la collerette 23 précédemment décrite. La surface d'appui 25 peut être formée sur une deuxième collerette 30, notamment similaire à la collerette 23. De plus, la surface d'appui 25 est une surface plane. Cette surface s'étend perpendiculairement à l'axe longitudinal X. Le bord du trou 26 comprend également une surface plane s'étendent perpendiculairement à l'axe longitudinal X. L'axe 28 est vissé dans l'ouverture taraudée 13 de sorte à établir une tension relativement importante entre la surface d'appui 25 et la traverse de choc 14. Il résulte de cette tension importante un effort de friction à l'interface entre la surface d'appui 25 et la traverse de choc 14 qui permet d'obtenir un deuxième point d'appui pour le support 4G1, en complément du premier point d'appui formé par la coopération de la portion taraudée 24 avec l'ouverture taraudée13. L'axe 4G1 selon le premier mode de réalisation est particulièrement simple à réaliser.

De préférence, la portion filetée 24 n'est pas vissée jusqu'en fond de filet dans l'ouverture taraudée 13, de sorte qu'une certaine tension entre la surface d'appui 25 et la traverse de choc 14 peut résulter du vissage de l'axe 28. Avantageusement, un serrage de l'axe 28 au couple, c'est-à-dire en utilisant une clé dynamométrique, peut être préconisé afin de maîtriser la tension entre la surface d'appui 25 et la traverse de choc 14. On évite ainsi de serrer trop fort l'axe 28 et de déformer non intentionnellement l'absorbeur de chocs 16.

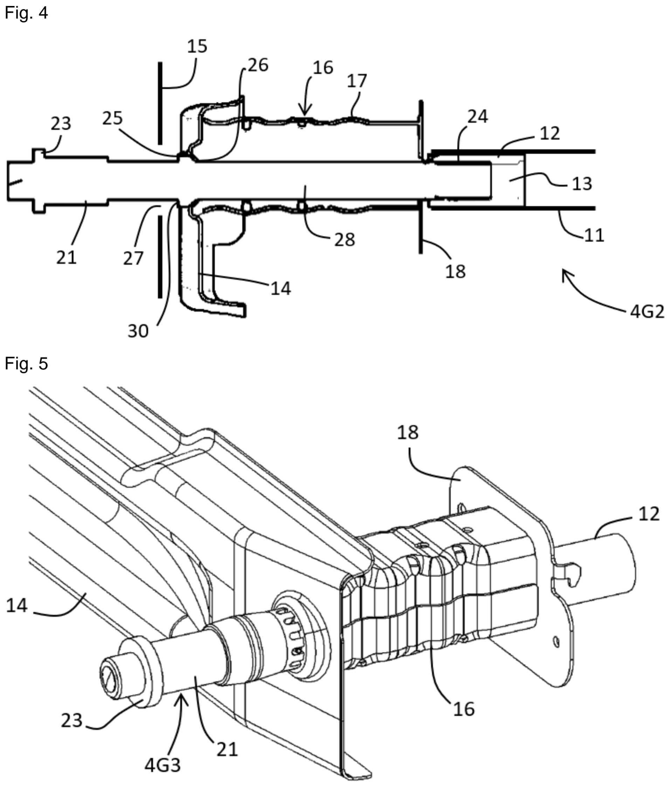

La figure 4 illustre le support 4G2 selon le deuxième mode de réalisation de l'invention. Le support 4G2 diffère du support 4G1 précédemment décrit simplement en ce que la surface d'appui 25 est une surface conique et non une surface plane. Le bord du trou 26 prévu dans la traverse de choc 14 comprend une forme complémentaire à la forme de la surface d'appui 25, et donc également une forme conique. Un avantage à prévoir une surface conique au lieu d'une surface plane est que l'appui de la surface conique sur la traverse de choc 14 fournit un meilleur soutien vertical et transversal à l'axe 18. L'axe 18 est donc encore mieux supporté que dans le premier mode de réalisation.

En remarque, un sommet du cône de la forme conique peut être orienté vers l'avant comme cela apparait sur la figure 4. En variante, le sommet du cône de la forme conique pourrait être orienté vers l'arrière. Dans ce cas, la forme du bord du trou 26 dans la traverse serait adaptée en conséquence.

Les figures 5, 6 et 7 illustrent le support 4G3 selon le troisième mode de réalisation. Le support 4G3 est formé par l'assemblage de plusieurs pièces. Le support 4G3 comprend principalement un axe 31, un élément d'appui 32 et un moyen de rappel 33. L'axe 31 comprend ladite portion filetée 24. L'élément d'appui 32 est mobile relativement à l'axe 31. En particulier, l'élément d'appui 32 peut comprendre une forme tubulaire agencée autour de l'axe 31 et peut coulisser le long d'une portion cylindrique de l'axe 31. Avantageusement, l'axe 31 comprend une surface de guidage permettant de guider l'élément d'appui 32 en translation parallèlement à l'axe longitudinal X. L'élément d'appui 32 comprend ladite surface d'appui 25. En particulier, l'élément d'appui est apte à venir au contact du bord du trou 26 au travers duquel passe l'axe 31. Le moyen de rappel 33 comprend une première extrémité en appui sur l'axe 31 et une deuxième extrémité en appui sur l'élément d'appui 32. Le moyen de rappel 33 est configuré de sorte que la surface d'appui 25 de l'élément d'appui 32 exerce un appui contre la traverse de choc 14 lorsque la portion filetée 24 est visée en fond de filet dans l'ouverture taraudée 13. Selon un mode de réalisation, le moyen de rappel 33 est un ressort, notamment un ressort hélicoïdal. Le ressort hélicoïdal est agencé autour de l'axe 31. Un avantage à utiliser le moyen de rappel 33 est qu'il est plus facile de maîtriser l'effort exercé par l'élément d'appui 32 sur la traverse de choc 14. En particulier, le support 4G3 peut être vissé dans l'ouverture taraudée 13 jusqu'en fond de filet, sans utiliser une clé dynamométrique. L'effort exercé par l'élément d'appui 32 sur la traverse de choc 14 dépend de la raideur et des dimensions du moyen de rappel 33 utilisé.

Selon le troisième mode de réalisation tel qu'illustré, la surface d'appui 25 est plane et s'étend perpendiculairement à l'axe longitudinal X. En variante, la surface d'appui 25pourrait être conique, comme dans le deuxième mode de réalisation.

Avantageusement, l'élément d'appui 33 comprend au moins une rainure 34, et le support 4G3 comprend au moins une goupille 35 solidaire de l'axe 31 et s'étendant dans la rainure 34. La goupille 35 est un élément s'étendent radialement. La goupille 35 peut être fixée dans un trou formé dans l'axe 31 à cet effet. La coopération de la goupille 35 avec la rainure 34 permet d'une part de former une butée qui empêche la désolidarisation de l'élément d'appui 32 et du moyen de rappel 33 lorsque le support 4G3 n'est pas utilisé. D'autre part, la coopération de la goupille 35 avec la rainure 34 permet aussi la transmission d'un couple de serrage ou de desserrage entre l'élément d'appui 32 et l'axe 31. Pour visser le support 4G3 dans l'ouverture taraudée, l'utilisateur peut ainsi faire tourner l'élément d'appui 32 autour d'un axe parallèle à l'axe longitudinal X. Avantageusement, on peut prévoir plusieurs goupilles coopérant avec plusieurs rainures pour répartir les efforts de serrage ou de desserrage du support sur une plus grande surface.

Selon le mode de réalisation présenté, l'élément d'appui 32 comprend une pluralité de rainures 34 réparties sur sa circonférence. Les rainures 34 s'étendent depuis la surface d'appui 25. Par conséquent, la surface d'appui 25 est interrompue par les différentes rainures 34 et l'extrémité avant de l'élément d'appui présente une forme crénelée. Un tel agencement des rainures facilite le montage du support 4G3 et permet à la goupille 35 de prendre facilement place dans l'une des rainures 34.

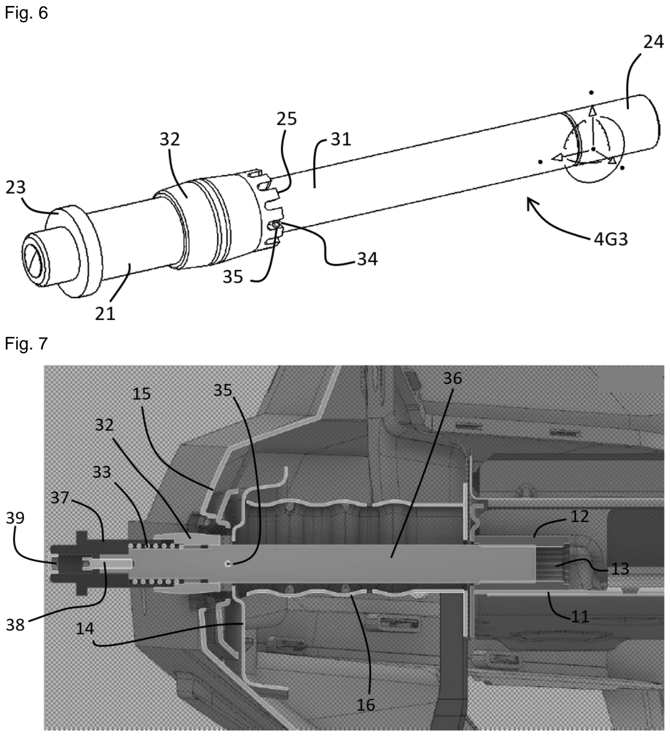

En référence à la figure 7, on observe que l'axe 31 est formé par l'assemblage d'une partie avant 36 et d'une partie arrière 37. La partie avant 36 et la partie arrière 37 sont fixées l'une à l'autre par une vis de fixation 38. La partie arrière 37 comprend ladite portion de soutien 21. La partie avant 36 comprend ladite portion filetée 24. L'extrémité arrière du moyen de rappel 33 peut être en appui contre la partie arrière 37. Un logement de forme annulaire peut être formé entre la partie avant 36 et la partie arrière 37. Le moyen de rappel 33 peut être logé dans ce logement. La partie arrière 37 peut comprendre un puits dans lequel la vis de fixation 38 est inséré. Le puits peut être fermé par un obturateur 39.

Finalement, grâce à l'invention, on dispose d'un support à la fois vissé dans l'ouverture taraudée prévue pour accueillir un anneau de remorquage et en appui contre une traverse de choc. Un tel support supporte mieux les efforts verticaux exercés par un dispositif de chargement fixé sur le support. En prévoyant deux tels supports à gauche et à droite du véhicule, le dispositif de chargement peut être fixé en deux points. Il est mieux maintenu et ne risque pas de pivoter autour d'un axe vertical ou autour d'un axe transversal. Le dispositif de chargement est ainsi maintenu de manière robuste et fiable. L'installation ou le retrait des supports est effectué très simplement par vissage ou par dévissage.

## Revendications

1. Agencement pour un véhicule automobile comprenant :
• un premier élément de caisse (11), notamment un premier longeron, équipé d'une ouverture taraudée (13) apte à coopérer avec un anneau de remorquage,
• une traverse de choc (14) fixée au premier élément de caisse,
• un support (4G, 4D, 4G1, 4G2, 4G3) comprenant :
- une portion de soutien (21) destinée à supporter une charge,
- une portion filetée (24) vissée dans l'ouverture taraudée, et
- une surface d'appui (25) en appui contre la traverse de choc.

2. Agencement selon la revendication précédente, **caractérisé en ce que** la traverse de choc (14) comprend un trou (26), le support (4G, 4D, 4G1, 4G2, 4G3) traversant le trou, et la surface d'appui (25) étant en appui contre un bord du trou.

3. Agencement selon l'une des revendications précédentes, **caractérisé en ce que** le support (4G1, 4G2) comprend un axe (28) monolithique, notamment en acier, l'axe comprenant ladite portion filetée (24) et ladite surface d'appui (25).

4. Agencement selon l'une des revendications précédentes, **caractérisé en ce que** la surface d'appui (25) est une surface plane ou une surface conique.

5. Agencement selon l'une des revendications précédentes, **caractérisé en ce qu'**il comprend un absorbeur de chocs (16) s'étendant entre le premier élément de caisse (11) et la traverse de choc (14), l'absorbeur de chocs (16) étant destiné à absorber au moins une partie de l'énergie d'un choc contre la traverse de choc, la traverse de choc étant fixée au premier élément de caisse par l'intermédiaire dudit absorbeur de chocs (16).

6. Agencement selon la revendication précédente, **caractérisé en ce que** l'absorbeur de chocs (16) comprend un élément tubulaire (17), et **en ce que** le support (4G, 4D, 4G1, 4G2, 4G3) s'étend à l'intérieur de l'élément tubulaire.

7. Agencement selon l'une des revendications précédentes, **caractérisé en ce que** le support (4G3) comprend un axe (31), l'axe comprenant ladite portion filetée (24), le support comprenant en outre un élément d'appui (32) mobile relativement à l'axe et un moyen de rappel (33), l'élément d'appui comprenant ladite surface d'appui (25), le moyen de rappel (33) comprenant une première extrémité en appui sur l'axe (31) et une deuxième extrémité en appui sur l'élément d'appui (32), le moyen de rappel étant configuré de sorte que la surface d'appui de l'élément d'appui exerce un appui contre la traverse de choc (14).

8. Agencement selon l'une des revendications 6 ou 7, **caractérisé en ce que** l'élément d'appui (32) comprend au moins une rainure (34), et **en ce que** le support (4G3) comprend au moins une goupille (35) solidaire de l'axe (31) et s'étendant dans la rainure.

9. Agencement selon l'une des revendications précédentes, **caractérisé en ce qu'**il comprend en outre un dispositif de chargement (2) fixé à la portion de soutien (21) du support.

10. Véhicule automobile, **caractérisé en ce qu'**il comprend un agencement selon l'une des revendications précédentes.
